# EUROPÄISCHE PATENTSCHRIFT

(11) **EP 4 675 314 B1**
(45) Veröffentlichungstag und Bekanntmachung des Hinweises auf die Patenterteilung: **21.10.2026**
(21) Anmeldenummer: 25181319.2
(22) Anmeldetag: 06.06.2025
(51) Int. Cl.: G01S 17/00

(54) **SENSORANORDNUNG**
SENSOR ASSEMBLY
AGENCEMENT DE CAPTEURS

(30) Priorität: 04.07.2024 DE 202024103699 U
(43) Veröffentlichungstag der Anmeldung: 07.01.2026
(73) Patentinhaber: Leuze electronic GmbH + Co. KG, 73277 Owen/Teck (DE)
(72) Erfinder: Abraham, Sven-Philipp, 72622 Nürtingen (DE); Pfeffer, Wolfgang, 73111 Lauterstein (DE)
(74) Vertreter: Ruckh, Rainer Gerhard

(56) Entgegenhaltungen:
- EP-A2- 2 418 517
- EP-B1- 3 179 461
- DE-A1- 102013 019 925

## Beschreibung

Die Erfindung betrifft eine Sensoranordnung mit einem optischen Sensor.

Der optische Sensor der Sensoranordnung weist generell eine Empfängereinheit mit einer Kamera auf. Zudem weist der optische Sensor eine Steuer- und Auswerteeinheit auf, in welcher Bildsignale der Kamera ausgewertet werden. Weiterhin kann der optische Sensor eine Beleuchtungseinheit aufweisen, mittels derer ein Sichtfeld der Kamera ausgeleuchtet wird.

Typischerweise wird der optische Sensor zur Erfassung von Codes, die auf Objekten angebracht sind, eingesetzt. Eine Sensoranordnung hierfür kann derart ausgebildet sein, dass der optische Sensor an einem Fördermittel wie zum Beispiel einem Förderband angeordnet ist. Auf dem Fördermittel transportierte Objekte werden nacheinander durch das Sichtfeld der Kamera des optischen Sensors bewegt. Befindet sich ein Objekt im Sichtfeld der Kamera, detektiert diese den Code auf dem Objekt, der dann anhand der Bildsignale der Kamera in der Steuer- und Auswerteeinheit dekodiert wird.

Vorteilhaft ist für den optischen Sensor eine Lesetorsteuerung vorgesehen. Mittels eines Aktivierungssensors, der von einer Lichtschranke, einem Lichttaster oder dergleichen ausgebildet sein kann, wird erfasst, wann sich ein Objekt in das Sichtfeld der Kamera hinein bewegt. Die Lesetorsteuerung, die in der Steuer- und Auswerteeinheit implementiert sein kann, öffnet dann ein von einem Zeitintervall gebildetes Lesetor. Nur innerhalb des Lesetors wird mit dem optischen Sensor eine Codeerfassung durchgeführt, wobei hierzu alle erforderlichen Elektronikkomponenten des optischen Sensors bei voller Leistung betrieben werden. Außerhalb des Lesetors erfolgt keine Codeerfassung, so dass dann prinzipiell die Kamera und die Beleuchtungseinheit des optischen Sensors deaktiviert sein können.

Bei fehlerfreiem Betrieb des Fördermittels ist ein Objekt durch die Fördergeschwindigkeit des Fördermittels nur kurzzeitig im Sichtfeld, so dass das Lesetor nur kurzzeitig geöffnet ist.

Ein Problem entsteht dann, wenn das Fördermittel stillsteht. Befindet sich dann ein Objekt im Sichtfeld der Kamera, bleibt das Lesetor dauerhaft geöffnet und der optische Sensor arbeitet fortdauernd bei voller Leistung. Dies führt zu einer erhöhten thermischen Belastung, die zum Ausfall der Kamera und damit des gesamten optischen Sensors führen kann.

Um derartige Beschädigungen zu vermeiden, ist es bekannt, im optischen Sensor einen Temperatursensor vorzusehen. Wird mit dem Temperatursensor eine Übertemperatur festgestellt, wir die Kamera abgeschaltet, um sie vor Beschädigungen zu schützen. Die Kamera wird erst dann wieder eingeschaltet, wenn die Temperatur im Innenraum des optischen Sensors wieder auf eine Arbeitstemperatur abgesunken ist. Erst dann ist der optische Sensor wieder betriebsbereit. Dies führt zu langen Stillstandszeiten des optischen Sensors, wodurch die Verfügbarkeit des optischen Sensors erheblich eingeschränkt wird.

Prinzipiell könnten diese Stillstandszeiten dadurch reduziert werden, dass Kühlkörper und/oder Gebläse am oder im optischen Sensor angebracht werden, was jedoch den konstruktiven Aufwand der Sensoranordnung in unerwünschter Weise erhöht.

Die EP 2 418 517 A2 betrifft einen optoelektronischen Sensor. Der Sensor ist eingerichtet, derart im Bereich einer Flügelanlage angeordnet zu werden, dass er einen vorbestimmten, zu überwachenden Erfassungsbereich in Bezug auf die Flügelanlage sensorisch abdeckt. Der Sensor ist als Bilderfassungssensor gestaltet und weist zumindest zwei lichtempfindliche Sensorelemente auf, die so angeordnet sind, dass sie den zu überwachenden Erfassungsbereich vollständig abdecken. Die von den aktivierten Sensorelementen erfassten Lichtwerte ergeben zusammen ein jeweiliges, vom Sensor erfasstes Bild. Zudem weist der Sensor eine Steuerungseinrichtung auf oder ist mit dieser gekoppelt. Die Steuerungseinrichtung ist ausgebildet, vorbestimmte Sensorelemente des Sensors gemäß einem jeweils aktuellen Zustand der Flügelanlage zu aktivieren bzw. zu inaktivieren.

Die EP 3 179 461 B1 betrifft eine mobile elektronische Vorrichtung, umfassend einen ersten Sensor, einen zweiten Sensor, der einen Verbrauchsstrom hat, der kleiner als jener des ersten Sensors in Bezug auf eine vorbestimmte Spannung ist und mindestens einen Prozessor, der dazu ausgebildet ist, gemäß einem stationären Zustand der elektronischen Vorrichtung einen Betriebszustand des ersten Sensors von einem aktiven Modus zu einem Schlafmodus zu ändern, gemäß einem Bewegungssignal von dem zweiten Sensor den Betriebszustand des ersten Sensors von dem Schlafmodus zu dem aktiven Modus zu ändern, wobei Energie, die dem ersten Sensor in dem aktiven Modus zugeführt wird, größer ist als Energie, die dem ersten Sensor in dem Schlafmodus zugeführt wird, wobei Energie, die ausreicht, um zu bewirken, dass der zweite Sensor das Bewegungssignal sendet, dem zweiten Sensor zugeführt wird, während der erste Sensor in dem Schlafmodus ist, wobei der erste Sensor ein optischer Bildsensor ist, und wobei der optische Bildsensor dazu ausgebildet ist, ein Bild eines Teils einer Umgebungsansicht der mobilen Vorrichtung zu erfassen.

Die DE 10 2013 019 925 A1 betrifft ein Kamerasystem für eine Bewegungserkennung in einer Umgebung eines Installationsortes des Kamerasystems. Hierbei weist das Kamerasystem eine Kamera und einen Sensor auf. Es ist vorgesehen, dass die Kamera in einem ersten Betriebszustand einen ersten Energieverbrauch aufweist und mit der Kamera ein Bereich erfassbar ist. Ferner weist der Sensor in einem zweiten Betriebszustand einen zweiten Energieverbrauch auf, wobei der Sensor den Bereich der Kamera überwacht und die Kamera von einem Ruhezustand in den ersten Betriebszustand schaltbar ist, wenn mit dem Sensor eine Bewegung in dem Bereich erfasst wurde, wobei der zweite Energieverbrauch mindestens um die Hälfte geringer ist als der erste Energieverbrauch.

Der Erfindung liegt die Aufgabe zugrunde, eine Sensoranordnung der eingangs genannten Art bereitzustellen, welche bei geringem konstruktivem Aufwand eine hohe Verfügbarkeit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem optischen Sensor mit Elektronikkomponenten, umfassend eine Empfängereinheit in Form einer Kamera und eine Steuer- und Auswerteeinheit, welche zur Auswertung von Bildsignalen der Kamera ausgebildet ist. Ein von einem Zeitintervall gebildetes Lesetor ist aktivierbar. Bei aktiviertem Lesetor werden Elektronikkomponenten in einem Normalbetrieb betrieben, in welchem Merkmale von oder auf Objekten detektiert und erfasst werden. Bei aktiviertem Lesetor wird dann, wenn wenigstens ein Kameraparameter der Kamera einen Grenzwert erreicht, ein Sleep-Modus aktiviert, in dem Elektronikkomponenten vom Normalbetrieb in einen Energiesparmodus versetzt sind.

Der optische Sensor der erfindungsgemäßen Sensoranordnung ist ein bildverarbeitender Sensor, der als Elektronikkomponenten eine Steuer- und Auswerteeinheit, eine Kamera und vorteilhaft eine Beleuchtungseinheit aufweist. Die Kamera kann von einem Bildsensor in Form eines CMOS- oder CCD-Arrays mit einer matrixförmigen Anordnung von Empfangselementen ausgebildet sein, die Beleuchtungseinheit besteht beispielsweise aus einer Lichtstrahlen emittierenden Anordnung von Leuchtdioden. Mit der Steuer- und Auswerteeinheit, die von einem Mikroprozessor, Microcontroller und dergleichen gebildet ist, wird der Betrieb der Kamera und der Beleuchtungseinheit gesteuert. Vorteilhaft strahlt die Beleuchtungseinheit mit einer Beleuchtungsfrequenz Licht aus.

Weiterhin generiert die Kamera mit einer Bildrate Bilder.

Vorteilhaft sind die Kamera und die Beleuchtungseinheit derart synchronisiert, dass die Bildrate der Kamera durch die Beleuchtungsfrequenz der Beleuchtungseinheit vorgegeben ist. Insbesondere bestimmt die Steuer- und Auswerteeinheit die Bildrate zusammen mit der Beleuchtungsfrequenz.

Mit dem optischen Sensor werden generell bestimmte Merkmale an oder auf Objekten identifiziert. Hierzu werden die Objekte mit der Kamera erfasst und die dabei erhaltenen Bildsignale der Kamera in der Steuer- und Auswerteeinheit ausgewertet. Abhängig von dabei identifizierten Merkmalen generiert die Steuer- und Auswerteeinheit ein entsprechendes Ausgangssignal.

Besonders vorteilhaft werden mit der Kamera des optischen Sensors Codes auf Objekten erfasst. In der Steuer- und Auswerteeinheit werden in Bildsignalen der Kamera enthaltene Codeinformationen dekodiert.

Erfindungsgemäß erfolgt für den optischen Sensor eine Lesetorsteuerung derart, dass zeit- oder ereignisgesteuert ein ein Zeitintervall bildendes Lesetor aktiviert wird, wobei nur bei aktiviertem Lesetor mit dem optischen Sensor Merkmale, insbesondere Codes auf Objekten erfasst und identifiziert, insbesondere dekodiert werden. Die Lesetorsteuerung kann mit einer externen Steuerung durchgeführt werden. Vorteilhaft wird die Lesetorsteuerung mit der Steuer- und Auswerteeinheit des optischen Sensors selbst durchgeführt. Bei aktiviertem Lesetor werden die Steuer- und Auswerteeinheit, die Kamera und die Beleuchtungseinheit in einem Normalbetrieb betrieben, wobei im Normalbetrieb diese Elektronikkomponenten insbesondere bei voller Leistung betrieben werden.

Demgegenüber erfolgt mit dem optischen Sensor bei nicht aktiviertem Lesetor keine Erfassung von Merkmalen beziehungsweise Codes, so dass dann die Beleuchtungseinheit und die Kamera deaktiviert sein können.

Ist ein Lesetor für einen zu langen Zeitraum aktiviert, besteht die Gefahr, dass Elektronikkomponenten, insbesondere die Kamera, die Steuer- und Auswerteeinheit und die Beleuchtungseinheit überhitzen und dadurch beschädigt werden.

Diese Gefahr wird erfindungsgemäß dadurch vermieden, dass mit geeigneten Sensormitteln überwacht wird, ob ein Kameraparameter einen Grenzwert erreicht. Wird dieser Grenzwert erreicht, erfolgt ein Übergang in einen Sleep-Modus, in dem Elektronikkomponenten, insbesondere die Kamera vom Normalbetrieb in einen Energiesparmodus versetzt sind. In diesem Energiesparmodus ist die Leistungsaufnahme der Elektronikkomponenten, insbesondere der Kamera, gegenüber dem Normalbetrieb reduziert, so dass Überhitzungen und dadurch bedingte Beschädigungen der Elektronikkomponenten vermieden werden.

Vorteilhaft erfolgt die Steuerung des Sleep-Modus durch die Steuer- und Auswerteeinheit.

Zweckmäßig erfolgt dabei ein Übergang in den Sleep-Modus, wenn eine Zeit oder eine Temperatur im Innenraum des optischen Sensors oder eine Leistungsaufnahme der Kamera einen Grenzwert erreicht.

Mit der Steuer- und Auswerteeinheit wird nicht nur der Start des Sleep-Modus, sondern auch das Ende des Sleep-Modus vorgegeben, wobei diese Steuerungen generell ereignisgesteuert erfolgen.

Um Überhitzungen von Elektronikkomponenten zu vermeiden, sind im Sleep-Modus Elektronikkomponenten abgeschaltet oder werden im Vergleich zum Normalbetrieb mit einem reduzierten Leistungsumfang betrieben.

Das Abschalten von Elektronikkomponenten erfolgt dabei derart, dass der optische Sensor nur insoweit betriebsbereit ist, dass dieser noch bestimmte Grundfunktionen durchführen kann.

Ein wesentlicher Vorteil der Erfindung besteht darin, dass der optische Sensor zur Vermeidung von Überhitzungen nicht komplett abgeschaltet werden muss. Vielmehr bleibt der optische Sensor auch im Sleep-Modus noch eingeschränkt funktionsfähig und kann Überwachungs- oder Steuerungsfunktionen übernehmen, so dass die Verfügbarkeit der Sensoranordnung nicht oder nicht nennenswert eingeschränkt ist.

Beispielsweise sind im Sleep-Modus die Bildrate der Kamera und/oder die Beleuchtungsfrequenz und/oder der Beleuchtungsstärke der Beleuchtungseinheit gegenüber dem Normalbetrieb reduziert.

Wenn die Bildrate über die Beleuchtungsfrequenz der Beleuchtungseinheit vorgegeben wird, kann besonders vorteilhaft die Bildrate mit der Beleuchtungsfrequenz reduziert werden.

Weiterhin ist es möglich, dass im Sleep-Modus die Steuer- und Auswerteeinheit gegenüber dem Normalbetrieb mit einer geringeren Taktfrequenz betrieben ist und/oder die Bildauswertung der Kamera reduziert ist.

Dadurch kann die thermische Belastung der Steuer- und Auswerteeinheit gesenkt werden. Wird die Steuer- und Auswerteeinheit mit einer geringeren Taktfrequenz betrieben, so können Funktionen langsamer oder Auswertungen mit einer geringeren Auflösung und/oder größeren Reaktionszeit durchgeführt werden. Auch können im Sleep-Modus einige Funktionen wie zum Bespiel die Ansteuerung von Ein-/ Ausgabeeinheiten abgeschaltet sein, wodurch die Steuer- und Auswerteeinheit entlastet wird.

Gemäß einer vorteilhaften Ausführungsform der Sensoranordnung erfasst der optische Sensor Codes auf Objekten, die mit einem Fördermittel am optischen Sensor vorbeibewegt werden.

Der optische Sensor erfasst dann, wenn ein Objekt in das Sichtfeld der Kamera eintritt, eine Markierung oder einen Code auf dem Objekt.

Die Lesetorsteuerung wird hierfür derart durchgeführt, dass dann, wenn ein Objekt in das Sichtfeld der Kamera eintritt, ein Lesetor aktiviert wird und das

Lesetor deaktiviert wird, wenn das Objekt das Sichtfeld der Kamera verlässt oder das Objekt erfolgreich detektiert wurde.

Diese Lesetorsteuerung kann prinzipiell durch eine Steuerung des Fördermittels erfolgen, wenn die Zeiten, wann ein Objekt den optischen Sensor passiert, bekannt sind.

Vorteilhaft ist in der Umgebung des optischen Sensors ein Aktivierungssensor wie zum Beispiel ein Lichttaster oder eine Lichtschranke vorgesehen, die auf dem Fördermittel transportierte Objekte detektiert. Abhängig von Sensorsignalen des Aktivierungssensors kann dann die Lesetorsteuerung, insbesondere auch im optischen Sensor selbst durchgeführt werden. Wird mit dem Aktivierungssensor ein Einfahren in das Sichtfeld des optischen Sensors registriert, wird das Lesetor aktiviert, entsprechend wird das Lesetor bei Ausfahren aus dem Sichtfeld des optischen Sensors oder bei erfolgreicher Detektion des Objekts deaktiviert.

Bei ordnungsgemäßer Funktion des Fördermittels werden auf diesem die Objekte kontinuierlich mit einer Fördergeschwindigkeit transportiert, so dass demensprechend ein Lesetor nur für eine begrenzte Zeit aktiviert ist.

Bleibt jedoch bei aktiviertem Lesetor das Fördermittel stehen, bleibt das Lesetor dauerhaft aktiviert, so dass durch den Normalbetrieb der Elektronikkomponenten, insbesondere der Kamera, der Steuer- und Auswerteeinheit und der Beleuchtungseinheit diese überhitzen können.

Dies wird mit der Aktivierung des Sleep-Modus verhindert. Der Sleep-Modus wird dann über die Steuer- und Auswerteeinheit wieder deaktiviert, wenn mit der Kamera festgestellt wird, dass sich das Objekt nach einem Stillstand wieder bewegt.

Hierzu wird in der Steuer- und Auswerteinheit nur eine Grauwertanalyse von Bildsignalen der Kamera durchgeführt, anhand derer festgestellt wird, ob sich ein Objekt bewegt oder nicht.

Die Kamera kann hierzu mit einer im Vergleich zum Normalbetrieb geringeren Bildrate betrieben werden. Die Beleuchtungsfrequenz und die Beleuchtungsstärke der Beleuchtungseinheit kann hieran angepasst oder komplett abgeschaltet sein. Die Steuer- und Auswerteeinheit kann dabei mit einer im Vergleich zum Normalbetrieb geringeren Taktfrequenz betrieben werden. Somit kann die Objektbewegung im Energiesparmodus des optischen Sensors detektiert werden.

Die Erfindung wird im Folgenden anhand der Zeichnungen erläutert. Es zeigen:
- Figur 1:: Ausführungsbeispiel des erfindungsgemäßen optischen Sensors.
- Figur 2:: Ausführungsbeispiel der erfindungsgemäßen Sensoranordnung.
- Figur 3:: Flussdiagramm für die Arbeitsweise des optischen Sensors gemäß Figur 1 in einem Normalmode.
- Figur 4:: Flussdiagramm für die Arbeitsweise des optischen Sensors gemäß Figur 1 in einem Sleep-Modus.

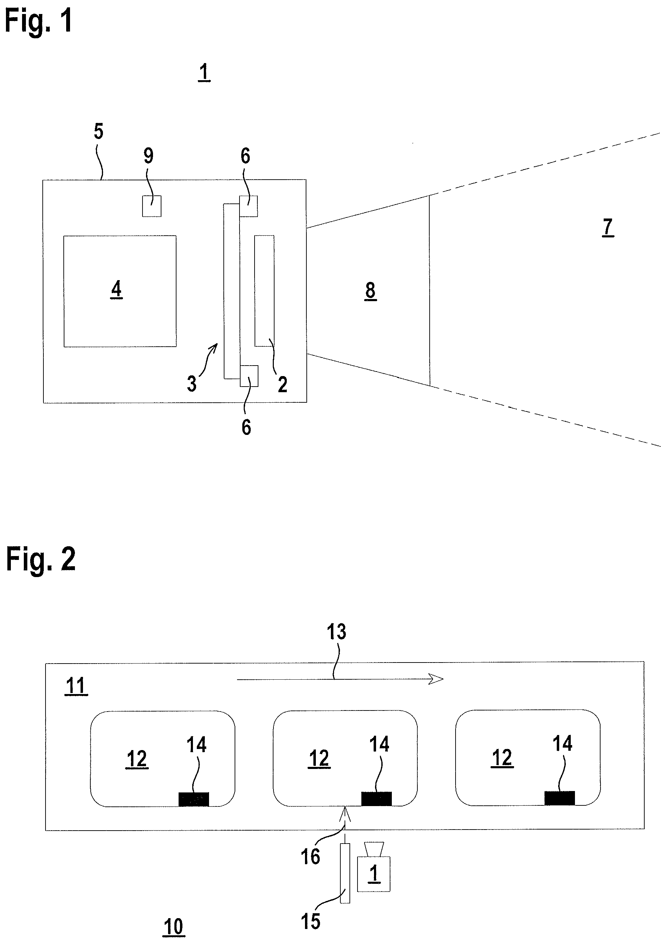

Figur 1 zeigt ein Ausführungsbeispiel des erfindungsgemäßen optischen Sensors 1. Der optische Sensor 1 weist als Elektronikkomponenten eine Kamera 2, eine Beleuchtungseinheit 3 und eine Steuer- und Auswerteeinheit 4 auf, die in einem Gehäuse 5 des optischen Sensors 1 integriert sind.

Die Kamera 2 bildet eine Empfängereinheit des optischen Sensors 1 und besteht aus einem Bildsensor in Form eines CMOS- oder CCD-Arrays mit einer matrixförmigen Anordnung von Empfangselementen. Die Steuer- und Auswerteeinheit 4 besteht aus einem Mikroprozessor, Microcontroller oder dergleichen. Die Beleuchtungseinheit 3 besteht aus einer Anordnung von Licht emittierenden Leuchtdioden 6, die ein Sichtfeld 7 der Kamera 2 beleuchten, wobei das Sichtfeld 7 von einem Objektiv 8 vorgegeben wird.

Im vorliegenden Fall ist die Beleuchtungseinheit 3 im Gehäuse 5 integriert. Alternativ kann die Beleuchtungseinheit 3 auch außerhalb des Gehäuses 5 angeordnet sein.

Weiterhin ist im Gehäuse 5 des optischen Sensors 1 ein Temperatursensor 9 angeordnet, dessen Signale in der Steuer- und Auswerteeinheit 4 ausgewertet werden.

Die Steuer- und Auswerteeinheit 4 steuert die Kamera 2 und die Beleuchtungseinheit 3, die Licht mit einer vorgegebenen Beleuchtungsfrequenz emittiert. Die Kamera 2 nimmt mit einer Bildrate Bilder auf, wobei die Bildrate oder die Beleuchtungsfrequenz vorgegeben ist.

Die Steuer- und Auswerteeinheit 4 wertet Bildsignale der Kamera 2 aus, um bestimmte Merkmale auf Objekten 12 zu identifizieren.

Figur 2 zeigt ein Ausführungsbeispiel der erfindungsgemäßen Sensoranordnung 10, bei welcher der optische Sensor 1 gemäß Figur 1 eingesetzt wird.

Wie aus Figur 2 ersichtlich, werden auf einem Fördermittel in Form eines Förderbands 11 Objekte 12, wie zum Beispiel Kisten oder Pakete, in einer Förderrichtung 13 transportiert. Auf den Objekten 12 befinden sich Codes 14, wie zum Beispiel Barcodes oder 2D-Codes.

Der optische Sensor 1 ist seitlich (wie in Figur 2 dargestellt) oder oberhalb des Förderbands 11 angeordnet und detektiert ein Objekt 12 mit dessen Code 14, wenn sich das Objekt 12 im Sichtfeld 7 des optischen Sensors 1, das heißt im Sichtfeld 7 der Kamera 2 befindet.

Die in den Bildsignalen der Kamera 2 enthaltenen Codeinformationen werden in der Steuer- und Auswerteeinheit 4 dekodiert, wodurch der jeweilige Code 14 erfasst ist.

In Förderrichtung 13 dem optischen Sensor 1 vorgeordnet befindet sich ein Aktivierungssensor 15 in Form eines Lichttasters 16, der Lichtstrahlen in Richtung des Förderbands 11 emittiert. Mit dem Aktivierungssensor 15 werden die auf dem Förderband 11 transportierten Objekte 12 erfasst. Anstelle eines Lichttasters 16 können auch andere Aktivierungssensoren 15, wie z.B. auch mechanische Schalter vorgesehen sein.

Abhängig von den Sensorsignalen des Aktivierungssensors 15 führt die Steuer- und Auswerteeinheit 4 des optischen Sensors 1 eine Lesetorsteuerung durch, so dass dann, wenn ein Objekt 12 im Sichtfeld 7 des optischen Sensors 1 ist, ein Lesetor aktiviert ist.

Bei aktiviertem Lesetor wird der optische Sensor 1 in einem Normalbetrieb betrieben, in dem vorteilhaft die Elektronikkomponenten des optischen Sensors 1 bei voller Leistung betrieben werden, das heißt die Steuer- und Auswerteeinheit 4 arbeitet mit einer entsprechend hohen Taktrate, die Kamera 2 nimmt Bilder mit einer hohen Bildrate auf, die vorteilhaft durch die oder mit der Beleuchtungsfrequenz der Beleuchtungseinheit 3 vorgegeben ist.

Im Normalbetrieb werden anhand der Bildsignale der Kamera 2 die Codes 14 der Objekte 12 erfasst und in der Steuer- und Auswerteeinheit 4 dekodiert.

Bei deaktiviertem Lesetor erfolgt keine Codeerfassung, die Beleuchtungseinheit 3 und die Kamera 2 können dann abgeschaltet sein.

Ist das Förderband 11 intakt, werden die Objekte 12 fortlaufend auf diesem mit einer Fördergeschwindigkeit transportiert, so dass das jeweilige Lesetor zur Erfassung eines Codes 14 auf einem Objekt 12 nur kurzzeitig aktiviert ist.

Bleibt jedoch das Förderband 11 stehen und ein Objekt 12 ist im Sichtfeld 7 der Kamera 2, so bleibt das Lesetor dauerhaft aktiviert. Da der optische Sensor 1 dann dauerhaft im Normalbetrieb ist, droht eine Überhitzung der Elektronikkomponenten, insbesondere der Kamera 2 der Auswerteeinheit und der Beleuchtungseinheit 3 des optischen Sensors 1.

Um derartige Überhitzungen zu vermeiden, wird bei aktiviertem Lesetor dann, wenn wenigstens ein Kameraparameter der Kamera 2 einen Grenzwert erreicht, ein Sleep-Modus aktiviert, in dem Elektronikkomponenten vom Normalbetrieb in einen Energiesparmodus versetzt sind.

Dabei erfolgt ein Übergang in den Sleep-Modus, wenn eine Zeit oder eine Temperatur im Innenraum des optischen Sensors 1 oder eine Leistungsaufnahme der Kamera 2 einen Grenzwert erreicht.

Die Steuerung des Sleep-Modus erfolgt mit der Steuer- und Auswerteeinheit 4 des optischen Sensors 1. Die Temperatur im optischen Sensor 1 wird mit dem Temperatursensor 9 erfasst. Die Zeitmessung erfolgt in der Steuer- und Auswerteeinheit 4, ebenso die Messung der Leistungsaufnahme, vorteilhaft abhängig von geeigneten Sensormitteln.

Generell sind im Sleep-Modus Elektronikkomponenten abgeschaltet oder werden im Vergleich zum Normalbetrieb mit einem reduzierten Leistungsumfang betrieben.

Insbesondere sind im Sleep-Modus die Bildrate der Kamera 2 und/oder die Beleuchtungsfrequenz und/oder die Beleuchtungsstärke der Beleuchtungseinheit 3 gegenüber dem Normalbetrieb reduziert.

Weiterhin ist im Sleep-Modus die Steuer- und Auswerteeinheit 4 gegenüber dem Normalbetrieb mit einer geringeren Taktfrequenz betrieben und/oder die Bildauswertung der Kamera 2 reduziert.

Im vorliegenden Fall wird im Sleep-Modus in der Steuer- und Auswerteeinheit 4 nur eine Grauwertanalyse von Bildern der Kamera 2 durchgeführt, anhand derer ermittelt wird, ob sich die Objekte 12 bewegen oder nicht.

Dabei wird bei einer Detektion einer Objektbewegung der Sleep-Modus beendet.

Der Sleep-Modus kann bei einer detektierten Objektbewegung deshalb beendet werden, da durch die Objektbewegung sichergestellt ist, dass das Lesetor zeitnah geschlossen wird, nämlich dann, wenn sich das Objekt 12 aus dem Sichtfeld 7 der Kamera 2 herausbewegt hat.

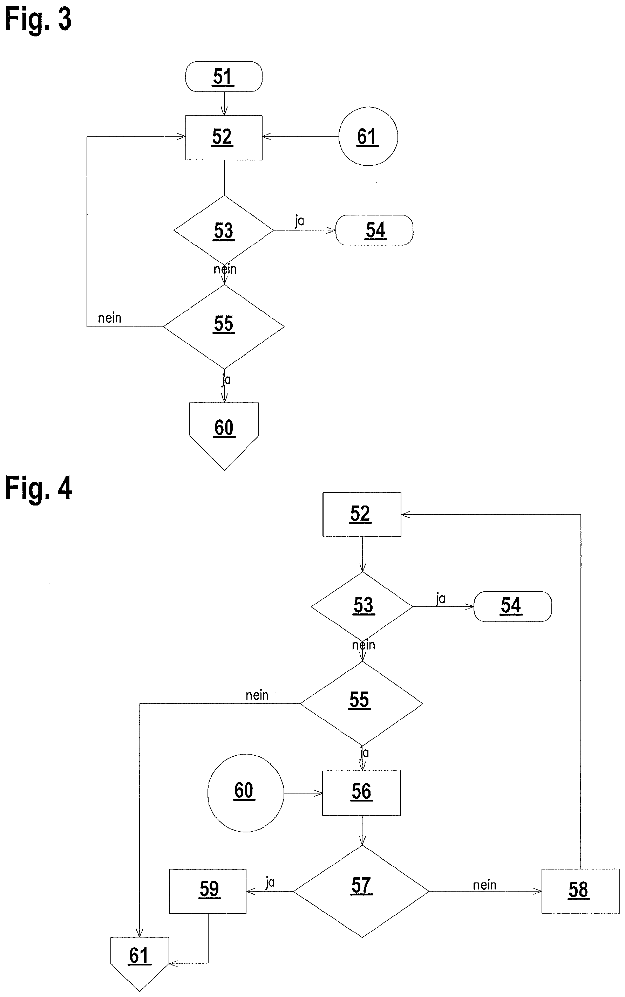

Die Funktionsweise des optischen Sensors 1 der Sensoranordnung 10 gemäß Figur 2 ist in den Flussdiagrammen 3 und 4 erläutert, wobei das Flussdiagramm gemäß Figur 3 den Normalbetrieb des optischen Sensors 1 und das Flussdiagramm gemäß Figur 4 den Sleep-Modus des optischen Sensors 1 zeigt.

Figur 3 zeigt den Normalbetrieb, der mit dem Start des Lesetors (Schritt 51) eingeleitet wird.

Im Normalbetrieb erfolgt die Bildaufnahme und Bildverarbeitung des optischen Sensors 1 (Schritt 52), um Codes 14 auf Objekten 12 zu erfassen.

Im Normalbetrieb wird fortlaufend geprüft, ob die Abbruchbedingung zum Beenden des Lesetors erfüllt ist (Schritt 53).

Ist diese Bedingung erfüllt, wird das Lesetor beendet (Schnitt 54). Ist diese Bedingung nicht erfüllt, wird geprüft, ob ein Auslöseereignis für den Sleep-Modus aufgetreten ist (Schritt 55).

Ist dies nicht der Fall, läuft der Normalbetrieb bei aktiviertem Lesetor weiter. Ist dies der Fall, wird der Sleep-Modus gestartet (Schritt 60).

Figur 4 zeigt in Schritt 52 bei aktiviertem Lesetor die Bildaufnahme und Bildverarbeitung zur Erfassung eines Codes 14.

Dabei wird fortlaufend geprüft, ob die Abbruchbedingung für die Aktivierung des Lesetors erfüllt ist (Schritt 53). Falls dies der Fall ist, wird das Lesetor deaktiviert (Schritt 54). Falls dies nicht der Fall ist und das Lesetor aktiviert bleibt, wird in der Steuer- und Auswerteeinheit 4 geprüft, ob ein Auslöseereignis für den Sleep-Modus aufgetreten ist (Schritt 55). Ist dies nicht der Fall, wird der Sleep-Modus nicht aktiviert oder, falls bereits aktiviert, beendet (Schritt 61). Ist dies jedoch der Fall, wird der Sleep-Modus gestartet (Schritt 60) und in der Steuer- und Auswerteeinheit 4 wird anhand von Grauwertsignalen ein Bildvergleich von aufeinanderfolgenden Bildern, vorzugsweise durch eine Schwellwertbewertung, durchgeführt, um zu ermitteln, ob sich ein erfasstes Objekt 12 bewegt oder nicht (Schritt 56).

Wird eine Objektbewegung detektiert (Schritt 57), wird der Energiesparmodus beendet, das heißt die entsprechenden Maßnahmen werden zurückgenommen (Schritt 59) und der Sleep-Modus wird beendet (Schritt 61).

Wird keine Objektbewegung detektiert (Schritt 57) werden Maßnahmen für den Energiesparmodus aufrechterhalten oder eingeleitet (Schritt 58).

### Bezugszeichenliste

- (1): Optischer Sensor
- (2): Kamera
- (3): Beleuchtungseinheit
- (4): Steuer- und Auswerteeinheit
- (5): Gehäuse
- (6): Leuchtdiode
- (7): Sichtfeld
- (8): Objektiv
- (9): Temperatursensor
- (10): Sensoranordnung
- (11): Förderband
- (12): Objekt
- (13): Förderrichtung
- (14): Code
- (15): Aktivierungssensor
- (16): Lichttaster

## Patentansprüche

1. Sensoranordnung (10) mit einem optischen Sensor (1) mit Elektronikkomponenten, umfassend eine Empfängereinheit in Form einer Kamera (2) und eine Steuer- und Auswerteeinheit (4), welche zur Auswertung von Bildsignalen der Kamera (2) ausgebildet ist, wobei ein von einem Zeitintervall gebildetes Lesetor aktivierbar ist, wobei bei aktiviertem Lesetor Elektronikkomponenten in einem Normalbetrieb betrieben werden, in welchem Merkmale von oder auf Objekten (12) detektiert und erfasst werden, **dadurch gekennzeichnet, dass** bei aktiviertem Lesetor dann, wenn wenigstens ein Kameraparameter der Kamera (2) einen Grenzwert erreicht, ein Sleep-Modus aktiviert wird, in dem Elektronikkomponenten vom Normalbetrieb in einen Energiesparmodus versetzt sind.

2. Sensoranordnung (10) nach Anspruch 1, **dadurch gekennzeichnet, dass** mit der Kamera (2) des optischen Sensors (1) Codes (14) auf Objekten (12) erfasst werden, wobei in der Steuer- und Auswerteeinheit (4) in Bildsignalen der Kamera (2) enthaltene Codeinformationen dekodiert werden.

3. Sensoranordnung (10) nach einem der Ansprüche 1 oder 2, **dadurch gekennzeichnet, dass** der optische Sensor (1) Codes (14) auf Objekten (12) erfasst, die mit einem Fördermittel am optischen Sensor (1) vorbeibewegt werden.

4. Sensoranordnung (10) nach einem der Ansprüche 1 bis 3, **dadurch gekennzeichnet, dass** der optische Sensor (1) als Elektronikkomponente eine Beleuchtungseinheit (3) aufweist, wobei die Beleuchtungseinheit (3) mit einer Beleuchtungsfrequenz Licht ausstrahlt.

5. Sensoranordnung (10) nach einem der Ansprüche 1 bis 4, **dadurch gekennzeichnet, dass** die Kamera (2) mit einer Bildrate Bilder generiert, wobei die Bildrate der Kamera (2) durch die oder mit der Beleuchtungsfrequenz der Beleuchtungseinheit (3) vorgegeben ist.

6. Sensoranordnung (10) nach einem der Ansprüche 1 bis 5, **dadurch gekennzeichnet, dass** in der Steuer- und Auswerteeinheit (4) eine Lesetorsteuerung durchgeführt wird.

7. Sensoranordnung (10) nach einem der Ansprüche 3 und 6, **dadurch gekennzeichnet, dass** die Lesetorsteuerung abhängig von Sensorsignalen eines Aktivierungssensors (15), der Objekte (12) auf dem Fördermittel detektiert, durchgeführt wird.

8. Sensoranordnung (10) nach einem der Ansprüche 1 bis 7, **dadurch gekennzeichnet, dass** bei nicht aktiviertem Lesetor die Kamera (2) und/oder die Beleuchtungseinheit (3) deaktiviert sind.

9. Sensoranordnung (10) nach einem der Ansprüche 1 bis 8, **dadurch gekennzeichnet, dass** die Steuerung des Sleep-Modus durch die Steuer- und Auswerteeinheit (4) erfolgt.

10. Sensoranordnung (10) nach einem der Ansprüche 1 bis 9, **dadurch gekennzeichnet, dass** ein Übergang in den Sleep-Modus erfolgt, wenn eine Zeit oder eine Temperatur im Innenraum des optischen Sensors (1) oder eine Leistungsaufnahme der Kamera (2) einen Grenzwert erreicht.

11. Sensoranordnung (10) nach einem der Ansprüche 1 bis 10, **dadurch gekennzeichnet, dass** im Sleep-Modus Elektronikkomponenten abgeschaltet sind oder im Vergleich zum Normalbetrieb mit reduziertem Leistungsumfang betrieben werden.

12. Sensoranordnung (10) nach Anspruch 11, **dadurch gekennzeichnet, dass** im Sleep-Modus die Bildrate der Kamera (2) und/oder die Beleuchtungsfrequenz und/oder die Beleuchtungsstärke der Beleuchtungseinheit (3) gegenüber dem Normalbetrieb reduziert sind.

13. Sensoranordnung (10) nach einem der Ansprüche 11 oder 12, **dadurch gekennzeichnet, dass** im Sleep-Modus die Steuer- und Auswerteeinheit (4) gegenüber dem Normalbetrieb mit einer geringeren Taktfrequenz betrieben ist und/oder die Bildauswertung der Kamera (2) reduziert ist.

14. Sensoranordnung (10) nach einem der Ansprüche 3 und 13, **dadurch gekennzeichnet, dass** im Sleep-Modus in der Steuer- und Auswerteeinheit (4) eine Grauwertanalyse von Bildern der Kamera (2) durchgeführt wird, anhand derer ermittelt wird, ob sich die Objekte (12) bewegen oder nicht.

15. Sensoranordnung (10) nach Anspruch 14, **dadurch gekennzeichnet, dass** bei einer Detektion einer Objektbewegung der Sleep-Modus beendet wird.

## Claims

1. A sensor assembly (10) comprising an optical sensor (1) with electronic components, comprising a receiver unit in the form of a camera (2) and a control and evaluation unit (4), which is designed to analyse image signals from the camera (2), wherein a read gate formed by a time interval can be activated, wherein, when the read gate is activated, electronic components operate in a normal mode in which features of or on objects (12) are detected and recorded, **characterised in that**, when the read gate is activated, if at least one camera parameter of the camera (2) reaches a threshold value, a sleep mode is activated in which the electronic components are switched from normal operation to an energy-saving mode.

2. A sensor assembly (10) according to claim 1, **characterised in that** the camera (2) of the optical sensor (1) captures codes (14) on objects (12), whereby code information contained in image signals from the camera (2) is decoded in the control and evaluation unit (4).

3. A sensor assembly (10) according to one of claims 1 or 2, **characterised in that** the optical sensor (1) detects codes (14) on objects (12) which are moved past the optical sensor (1) by a conveyor.

4. A sensor assembly (10) according to any one of claims 1 to 3, **characterised in that** the optical sensor (1) comprises, as an electronic component, an illumination unit (3), wherein the illumination unit (3) emits light at an illumination frequency.

5. A sensor assembly (10) according to any one of claims 1 to 4, **characterised in that** the camera (2) generates images at a frame rate, wherein the frame rate of the camera (2) is determined by or corresponds to the illumination frequency of the illumination unit (3).

6. A sensor assembly (10) according to any one of claims 1 to 5, **characterised in that** a readout gate control is carried out in the control and evaluation unit (4).

7. A sensor assembly (10) according to any one of claims 3 and 6, **characterised in that** the read gate control is carried out depending on sensor signals from an activation sensor (15) which detects objects (12) on the conveyor.

8. A sensor assembly (10) according to any one of claims 1 to 7, **characterised in that**, when the read gate is not activated, the camera (2) and/or the illumination unit (3) are deactivated.

9. A sensor assembly (10) according to any one of claims 1 to 8, **characterised in that** the sleep mode is controlled by the control and evaluation unit (4).

10. A sensor assembly (10) according to any one of claims 1 to 9, **characterised in that** a transition to sleep mode occurs when a time or a temperature inside the optical sensor (1) or the power consumption of the camera (2) reaches a threshold value.

11. A sensor assembly (10) according to any one of claims 1 to 10, **characterised in that**, in sleep mode, electronic components are switched off or operate with a reduced range of functions compared with normal operation.

12. A sensor assembly (10) according to claim 11, **characterised in that**, in sleep mode, the frame rate of the camera (2) and/or the lighting frequency and/or the illuminance of the lighting unit (3) are reduced compared with normal operation.

13. A sensor assembly (10) according to one of claims 11 or 12, **characterised in that**, in sleep mode, the control and evaluation unit (4) operates at a lower clock frequency than in normal operation and/or the image evaluation by the camera (2) is reduced.

14. A sensor assembly (10) according to one of claims 3 and 13, **characterised in that**, in sleep mode, a grey-scale analysis of images from the camera (2) is carried out in the control and evaluation unit (4), on the basis of which it is determined whether or not the objects (12) are moving.

15. A sensor assembly (10) according to claim 14, **characterised in that** the sleep mode is terminated upon detection of object movement.

## Revendications

1. Agencement de capteurs (10) comprenant un capteur optique (1) muni de composants électroniques, comprenant une unité de réception sous forme d'une caméra (2) et une unité de commande et d'analyse (4), qui est conçue pour analyser les signaux d'image de la caméra (2), une fenêtre de lecture définie par un intervalle de temps pouvant être activée, les composants électroniques fonctionnant, lorsque la fenêtre de lecture est activée, en mode normal, dans lequel des caractéristiques d'objets (12) ou sur ceux-ci sont détectées et enregistrées, **caractérisé en ce que**, lorsque la porte de lecture est activée, dès qu'au moins un paramètre de la caméra (2) atteint une valeur seuil, un mode veille est activé, dans lequel les composants électroniques passent du mode de fonctionnement normal à un mode d'économie d'énergie.

2. Agencement de capteurs (10) selon la revendication 1, **caractérisé en ce que** la caméra (2) du capteur optique (1) permet de détecter des codes (14) sur des objets (12), les informations de code contenues dans les signaux d'image de la caméra (2) étant décodées dans l'unité de commande et d'évaluation (4).

3. Agencement de capteurs (10) selon l'une des revendications 1 ou 2, **caractérisé en ce que** le capteur optique (1) détecte des codes (14) sur des objets (12) qui sont déplacés devant le capteur optique (1) à l'aide d'un moyen de transport.

4. Agencement de capteurs (10) selon l'une des revendications 1 à 3, **caractérisé en ce que** le capteur optique (1) comporte, en tant que composant électronique, une unité d'éclairage (3), l'unité d'éclairage (3) émettant de la lumière à une fréquence d'éclairage.

5. Agencement de capteurs (10) selon l'une des revendications 1 à 4, **caractérisé en ce que** la caméra (2) génère des images à une fréquence d'images, la fréquence d'images de la caméra (2) étant déterminée par la fréquence d'éclairage de l'unité d'éclairage (3) ou en fonction de celle-ci.

6. Agencement de capteurs (10) selon l'une des revendications 1 à 5, **caractérisé en ce qu'**une commande de porte de lecture est effectuée dans l'unité de commande et d'évaluation (4).

7. Agencement de capteurs (10) selon l'une des revendications 3 et 6, **caractérisé en ce que** la commande de la porte de lecture est effectuée en fonction des signaux d'un capteur d'activation (15) qui détecte des objets (12) sur le moyen de transport.

8. Agencement de capteurs (10) selon l'une des revendications 1 à 7, **caractérisé en ce que**, lorsque la porte de lecture n'est pas activée, la caméra (2) et/ou l'unité d'éclairage (3) sont désactivées.

9. Agencement de capteurs (10) selon l'une des revendications 1 à 8, **caractérisé en ce que** la commande du mode veille est assurée par l'unité de commande et d'évaluation (4).

10. Agencement de capteurs (10) selon l'une des revendications 1 à 9, **caractérisé en ce qu'**un passage en mode veille a lieu lorsqu'une durée ou une température à l'intérieur du capteur optique (1) ou une consommation électrique de la caméra (2) atteint une valeur limite.

11. Agencement de capteurs (10) selon l'une des revendications 1 à 10, **caractérisé en ce que**, en mode veille, les composants électroniques sont mis hors tension ou fonctionnent avec des capacités réduites par rapport au fonctionnement normal.

12. Agencement de capteurs (10) selon la revendication 11, **caractérisé en ce que**, en mode veille, la fréquence d'images de la caméra (2) et/ou la fréquence d'éclairage et/ou l'intensité lumineuse de l'unité d'éclairage (3) sont réduites par rapport au fonctionnement normal.

13. Agencement de capteurs (10) selon l'une des revendications 11 ou 12, **caractérisé en ce que**, en mode veille, l'unité de commande et d'analyse (4) fonctionne à une fréquence d'horloge inférieure à celle du fonctionnement normal et/ou l'analyse des images de la caméra (2) est réduite.

14. Agencement de capteurs (10) selon l'une des revendications 3 et 13, **caractérisé en ce que**, en mode veille, une analyse des niveaux de gris des images de la caméra (2) est effectuée dans l'unité de commande et d'analyse (4), à partir de laquelle on détermine si les objets (12) sont en mouvement ou non.

15. Agencement de capteurs (10) selon la revendication 14, **caractérisé en ce que** le mode veille est interrompu en cas de détection d'un mouvement d'objet.
